(19) Europäisches Patentamt
European Patent Office
Office européen des brevets

(11) EP 0 364 967 B1

(12) **EUROPEAN PATENT SPECIFICATION**

(45) Date of publication and mention
of the grant of the patent:
**03.01.1996  Bulletin 1996/01**

(51) Int Cl.6: **H04N 9/78**

(21) Application number: **89119283.3**

(22) Date of filing: **17.10.1989**

(54) **Luminance/chrominance signal separation circuit for pal color television signal**

Luminanz-/Chrominanzsignaltrennschaltung für PAL-Farbfernsehsignale

Circuit de séparation des signaux luminance/chrominance pour un signal de télévision en couleurs PAL

(84) Designated Contracting States:
**CH DE GB IT LI NL SE**

(30) Priority: **18.10.1988 JP 260618/88**

(43) Date of publication of application:
**25.04.1990  Bulletin 1990/17**

(73) Proprietor: **HITACHI, LTD.**
**Chiyoda-ku, Tokyo 100 (JP)**

(72) Inventors:
• **Achiha, Masahiko**
**Iruma-shi (JP)**

• **Kishihara, Mizuki**
**Tokorozawa-shi (JP)**

(74) Representative:
**Strehl Schübel-Hopf Groening & Partner**
**D-80538 München (DE)**

(56) References cited:
**EP-A- 0 023 555**          **GB-A- 2 078 054**
**US-A- 4 870 482**

• **PATENT ABSTRACTS OF JAPAN vol. 12, no.**
**187 (E-615) 31 May 1988, & JP-A-62 291 282**

## Description

The present invention relates to a luminance/ chrominance (Y/C) signal separation circuit for separating a luminance signal and color difference signals from a PAL color television signal.

In the composite color television (video) signal of PAL and NTSC television systems, the (carrier) chrominance signal is frequency-multiplexed with high frequency components of the luminance signal. Upon reproduction of the picture from the color television signal, therefore, it is extremely important to separate correctly the luminance signal and the chrominance signal from each other in order to assure a high quality of the reproduced picture.

The (carrier) chrominance signal of the PAL television system is generated through orthogonal modulation of two species of color difference signals (hereinafter also referred to as u-signal and v-signal, respectively) with a chrominance subcarrier and can be represented by the following expressions:

$$C = u \cdot \sin (2\pi f_{SC} t) \pm v \cdot \cos (2 f_{SC} t) \qquad (1)$$

where

$$f_{SC} = (284 - \frac{1}{4} + \frac{1}{625})f_h \qquad (2)$$

In the above expressions, $f_{SC}$ represents frequency of the chrominance subcarrier, $f_h$ represents the horizontal scanning frequency, and $\underline{t}$ represents the time. The sign ($\pm$) in the expression (1) indicates that the polarity of the v-signal is inverted every scanning line (i.e. on a line basis). Further, it is seen from the expression (2) that the phase of the chrominance subcarrier is offset by 90° relative to the line period and by 180° relative to the field period. Consequently, the chrominance signal (hereinafter also referred to as C-signal in abridgment) undergoes polarity inversion every two-line period and resumes the same phase relation every four-line period. The chrominance signal is offset by 90° relative to the frame period as well, undergoes the polarity inversion every two-frame period and resumes the same phase relation every four-frame period.

A technique for separating the luminance (Y) and chrominance (C) signals by making use of the polarity inversion taking place every two-line period and every two-frame period is disclosed in IEEE Trans. Consumer Electronics, CE-32, 3 (Augsut 1986), pp. 241-250. According to this known technique, the chrominance (C) signal is derived on the basis of the difference between two frames for a stationary picture detail or portion while the chrominance signal is extracted on the basis of the difference between two lines for a changing or moving picture detail. In this manner, the mode of separation of the luminance (Y) signal and the chrominance (C) signal is changed in dependence on whether the picture is stationary or moving. In this conjunction, there is disclosed in the above-mentioned literature a method of detecting motion or change of the picture by making use of a signal representative of difference making appearance every frame or every third frame. According to the detection method based on the inter-frame difference, a signal indicating "presence of motion" will be generated even for the still picture detail because of the chrominance component C. For this reason, it is recommended in the above literature to adopt the method of making use of the difference signal appearing every third frame if the capacity of a memory employed allows such.

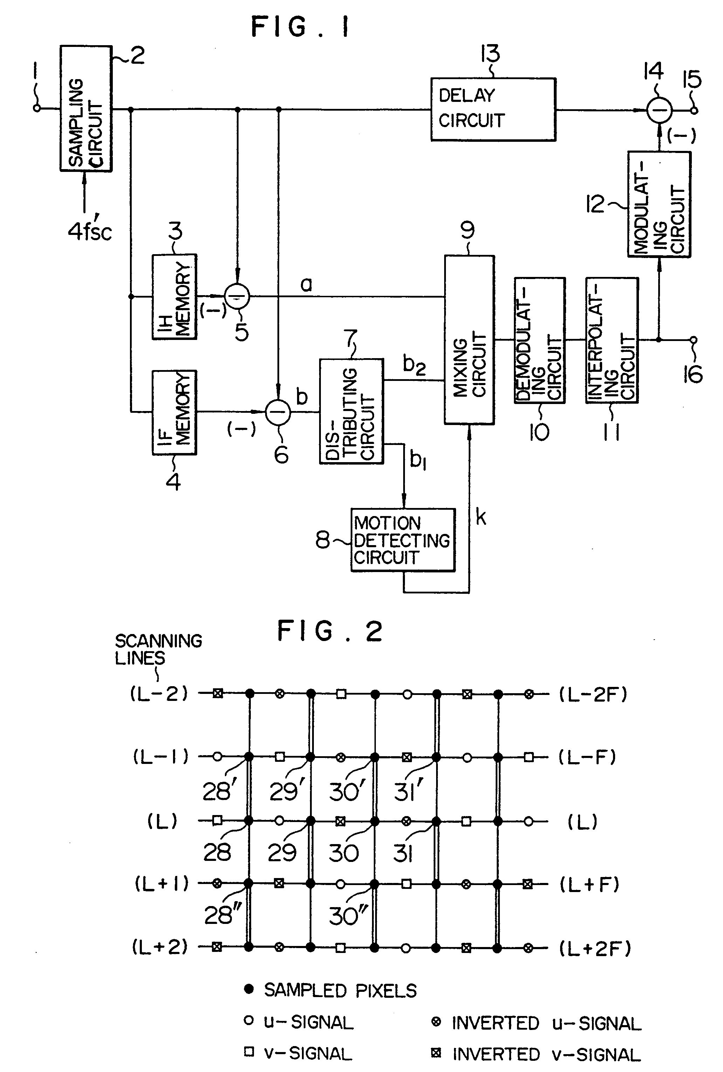

On the other hand, the PAL color television signal contains color burst signals each shifted in phase by ± 135° relative to the component given by the term u · sin (2π $f_{SC}$t) of the expression (1). The sign ($\pm$) represents inversion of the polarity on the line basis, as in the case of the v-signal in expression (1). The peak values of the modulated u-and v-signals are positioned relative to the individual scanning lines in such a phase relation as illustrated in Fig. 2 of the accompanying drawings. A technique for deriving the motion information representing motion or change of the object to be reproduced from the PAL color television signal and a technique for separating the chrominance signal from the PAL color television signal each by taking advantage of such phase relation are described in JP-A-58-212286 and JP-A-59-25491, respectively.

More specifically, when the chrominance (C) signal having the phase relation illustrated in Fig. 2 is sampled in phase coinciding with that of the color burst and at a sampling frequency which is four times as high as the frequency $f_{SC}$ of the chrominance subcarrier, the sampled pixels assume positions indicated by solid black circles in Fig. 2 (i.e. the positions shifted by 45°, 135°, 225° and 315° relative to the phase of the component u·sin (2π $f_{SC}$t)). The amplitudes of the chrominance signals for these pixels are given by

$$\pm (1/\sqrt{2}) (u + v) \text{ and } \pm(1/\sqrt{2}) (u - v)$$

Thus, the same polarities (of the pixels indicated as interconnected by duplex vertical lines) and the opposite polarities (of the pixels indicated as interconnected by simplex vertical line) alternate between the lines on the pixel basis.

The phase relation mentioned above also applies to the scanning lines located at same positions spaced by one frame from those shown in Fig. 2. In other words, the signal of the scanning line (L - F) preceding to the L-th scanning line by one frame bears the same phase relation to the signal of the (L - 1)-th scanning line preceding to the L-th scanning line by one line.

Therefore, the chrominance (C) signal for the pixels 28 and 30 on the L-th scanning line has the same polarity as the chrominance signal for the identical pixels (28', 30') preceding to the pixels (28, 30) by one-frame period, while the chrominance (C) signal for the pixels 29 and 31 has the polarity opposite to that of the chrominance signal for the corresponding pixels (29', 31') in the frame preceding by the one-frame period (or the pixels located immdiately above on the preceding line).

on the other hand, the chrominance (C) signals for the pixels 28 and 30 assumes the polarity opposite to that for the corresponding pixels 28" and 30" in the succeeding frame spaced for a period corresponding to one frame, while the chrominance signals for the pixels 29, 31 are of the same polarity as the chrominance signals for the pixels 29" and 31" in the frame succeeding by one frame.

Thus, by detecting a difference in the signals between the current frame and the preceding frame for the pixels 28 and 30 and deriving a difference in the signal between the current frame and the succeeding frame for the pixels 29 and 31, it is possible to extract the motion information, as is disclosed in JP-A-58-212286. Further, it is disclosed in JP-A-59-25491 to extract the chrominance signal for each of the pixels by detecting the difference from the preceding frame for the pixels 29 and 31 while detecting the difference from the succeeding frame for the pixels 28 and 30.

The technique described in the first mentioned literature (IEEE Trans.) suffers a problem that speedy motion or change may be overlooked because arithmetic operation over four frames must be performed for the detection of the motion. Besides, because the YC separation is realized on the basis of difference between two successive frames for the still picture detail while it is realized on the basis of the difference between the two successive lines for the moving picture detail, the YC separation chracteristic undergoes deterioration for the moving picture image which is changing only a bit although no problem arises for the utterly stationary or still picture, because of an excessively long temporal interval of the arithmetic operations in the vertical direction. Besides, such degradation in the YC separation characteristic occurs even-for the truely moving picture detail.

According to the prior art systems described above in conjunction with Fig. 2, the problem of an excessively long interval of the arithmetic operation on the time base is certainly solved by performing the arithmetic operation for extracting the chrominance signal on a frame basis. However, because both the signal of the preceding frame and that of the succeeding frame are utilized for the arithmetic operation, there is required a memory having a capacity capable of storing the data of two frames, giving rise to a problem. Further, because the signals of the preceding and succeeding frames are referred to for every odd- and even-numbered pixel, there arises a problem that the extracted chrominance signal is accompanied with noise of a period corresponding to two pixels.

A further motion-adaptive circuit for separating luminance and chrominance signals from a PAL colour television signal is disclosed in GB-A-2 078 054. This circuit includes two one-field delay memories and thus suffers from the same disadvantages as the above-mentioned prior art in that a large memory capacity is required.

An attempt to reduce the memory size of a motion-adaptive luminance/chrominance signal separation circuit has been made in JP-A-62-74162. This circuit stores the image data of only every second pixel in line and frame memories and reconstructs the signals of the omitted pixels by interpolation. The circuit is, however, intended for luminance/ chrominance signal separation from anNTSC colour television signal and unsuitable for processing a PAL colour television signal.

It is therefore an object of the present invention to provide a simple circuit for separating luminance and colour signals from a PAL television signal with high quality for both a stationary picture and a moving picture.

This object is solved by the circuit specified in claim 1. The subclaims are directed to preferred embodiments of the invention.

In view of the above and other objects which will be more apparent as description proceeds, it is proposed according to an implementation of the invention that a PAL color television signal is sampled by a sampling means in phase coinciding with that of the color burst and at a sampling frequency which is four times as high as that of the chrominance subcarrier ($f_{SH}$), difference in frame (also referred to as inter-frame difference) is arithmetically determined by means of a frame memory and a subtracting circuit, the inter-frame difference signal is divided by a distribution circuit into first and second inter-frame difference signals, motion control information is extracted from the first inter-frame difference signal, the ratio at which the second inter-frame difference signal is mixed with an inter-line difference signal representing difference between adjacent lines by a mixing means is changed under the control with the aid. of the motion control information, and that the chrominance signal thus obtained for every other pixel is interpolated for producing the color difference signals.

The chrominance signal obtained by sampling the PAL color television signal in phase coinciding with that of the color burst signal and at a frequency four times as high as that of the chrominance subcarrier is divided into a first chrominance signal for a first group of pixels having the same polarity as the same pixels in the preceding frame (such as those designated by 28, 30 and so forth in Fig. 2) and a second chrominance signal for a second group of pixels having the polarity opposite to that of the same pixels in the preceding frame (such as those denoted by 29, 31 and so forth in Fig. 2). Thus, the motion information can be derived from the inter-frame difference signal for the first pixel group (first frame difference signal).

On the other hand, from the inter-frame difference signal for the second pixel group (second frame difference signal) or from the inter-line difference signal, the chrominance (C) signal is derived for every other pixel. By changing the ratio at which the second inter-frame difference signal is mixed with the inter-line difference signal in accordance with the motion information mentioned above, the chrominance signal can be gained exactly and accurately for every other pixel. This chrominance signal is demodulated to two species of color difference signals which are then interpolated by the color difference signals of the pixels each interposed between the alternate pixels to thereby reproduce the color difference signals suffering substantially no noise of the two-pixel period.

By orthogonally modulating the color difference signal with the chrominance subcarrier ($f_{SC}$) to produce the chrominance signal which is then subtracted from the PAL composite color television signal, there can be separated correctly the luminance signal from the PAL composite color television signal.

According to the present invention, it is possible to reproduce the color signal of high quality from the PAL composite color television signal by using the single frame memory, since cross-color, dot interference and other unwanted phenomena can satisfactorily be eliminated for the stationary or still picture portion.

Further, since the information can be extracted with high accuracy by using the same frame memory, there can be obtained through the motion-adaptive processing utilizing the motion information the color signal of high quality for the motion picture reproduced from the conventional television broadcast signals.

These and other advantages and attainments of the present invention will become apparent to those skilled in the art upon a reading of the following detailed description when taken in conjunction with the drawings, in which:

Fig. 1 is a block diagram showing an arrangement of a luminance/chrominance signal separation circuit for a PAL color television signal according to an embodiment of the invention;

Fig. 2 is a diagram showing dispositions of pixels and signal samples for illustrating operation of the luminance/chrominance signal separation circuit according to the invention;

Fig. 3 is a block diagram showing circuit configurations of a motion detecting circuit and a mixing circuit employed in the luminance/chrominance signal separation circuit according to the invention;

Fig. 4 is a block diagram showing circuit configurations of a demodulating circuit and an interpolating circuit employed in the luminance/chrominance signal separation circuit according to the invention; and

Fig. 5 shows in a block diagram a configuration of the luminance/chrominance signal separation circuit according to another embodiment of the invention;

Now, the present invention will be described in detail in conjunction with preferred or exemplary embodiments thereof by reference to the drawings.

Fig. 1 is a circuit diagram showing a circuit arrangement of a luminance/chrominance signal separation circuit (also referred to simply as YC separation circuit) for a PAL color television signal according to an embodiment of the invention.

Referring to Fig. 1, when a PAL composite color television signal is applied to an input terminal 1, the signal undergoes sampling through a sampling circuit 2 which is also imparted with a function for analogue-to-digital (A/D) conversion. The sampling is performed with a sampling frequency of $4f_{SC}$ (which is four times as high as the frequency $f_{SH}$ of the chrominance subcarrier) and in phase coinciding with that of the color burst. Needless to say, the output of the sampling circuit 2 is a digital signal which is however shown in the figure in the form of simplex lines indicating simply flows of the signal. A part of the output of the sampling circuit 1 is supplied to a line memory 3 and a frame memory 4 to undergo delays of 1H and 1F, respectively, where H represents a period of one line and F represents a period of one frame. Subtraction circuits 5 and 6 denote arithmetic circuits adapted to derive an inter-line difference signal $\underline{a}$ and an inter-frame difference signal $\underline{b}$, respectively. The inter-frame difference signal $\underline{b}$ is supplied to a distribution circuit 7 to be divided into first and second inter-frame difference signals $b_1$ and $b_2$, wherein the first inter-frame difference signal $b_1$ is applied to the input of a motion (change) detecting circuit 8 designed to generate a motion or change information signal. The second inter-frame difference signal $b_2$ and the inter-line difference signal $\underline{a}$ are both inputted to a mixing circuit 9 to be mixed together at a mixing ratio $\underline{k}$ which is controlled by the output signal from the motion detecting circuit 8. The output signal of the mixing circuit 9 is supplied to a demodulator circuit 10 and demodulated to two species of color difference signals also referred to as the u-signal and the v-signal for every other picture element or pixel (i.e. for the alternate pixels). The output of the demodulating circuit 10 is then supplied to an interpolating circuit 11 through which the color difference signals are each interpolated by the signals for the pixels each interposed between the alternate pixels and which also serve to select the output signals of the demodulating circuit 10 and the interpolated color difference signals alternately at a frequency of $2f_{SC}$, whereby the color difference signals having a sampling frequency of $4f_{SC}$ is gained. The signal outputted from the interpolating circuit 11 is taken out through an output terminal 16 as the color difference signals, i.e. u-signal and v-signal. Besides, the u-signal and the v-signal outputted from the interpolating circuit 11 is also applied to the input of a modulating circuit 12 to undergo orthogonal modulation with the chrominance subcarrier, whereby the chrominance signal is produced as the output signal of the modulating circuit. The chrominance signal is then applied to an arithmetic circuit 14 which subtracts or removes the input chrominance signal from the PAL color television signal supplied thereto through a delay circuit 13 which is provided for imparting such an amount of delay to the PAL color television signal which matches with the delay involved in the processing for deriving the color difference signals described above. Thus, the luminance signal is separated from the PAL color television signal and can be taken out through an output terminal 15.

Now, the operations of the parts constituting the luminance/chrominance or YC separation circuit will be described in more detail. Fig. 2 is a diagram for illustrating phase relations among the pixel signals resulting from the sampling performed by the sampling circuits 2 and the u- and v-signals modulated orthogonally in accordance with the expression (1) mentioned hereinbefore. In Fig. 2, horizontal lines represents horizontal scanning lines. More specifically, lines (L - 2), (L - 1), (L), (L + 1), (L + 2) represent the scanning lines shown sequentially in the vertical direction within one and the same field, which may however be considered to be the scanning lines preceding and succeeding the scanning line (L) by one or more frames and thus can also be represented by (L - 2F), (L - F), (L), (L + F) and (L + 2F). In Fig. 2, a blank circle and a crossed circle represent, respectively, a maximum value and a minimum value of the u-signal, while a blank rectangle and a crossed rectangle represents a maximum value and a minimum value of the v-signal with a solid circle in black representing a lcoation of the pixel as sampled. As the result of the sampling with the frequency of $4f_{SC}$ and in phase coinciding with that of the color burst, as described hereinbefore, a series of the sampled values are produced for each of the scanning lines, which can be expressed by a repetition of a value sequence of

$$\frac{1}{\sqrt{2}} (u + v), - \frac{1}{\sqrt{2}} (u - v), - \frac{1}{\sqrt{2}} (u + v) \text{ and } \frac{1}{\sqrt{2}} (u - v)$$

With regard to the relations of the individual sampled values of the u- and v-signals on each scanning line to those on the other scanning lines, it will be understood that the u- and v-signals make appearance repeatedly with same and opposite polarities alternating with each other on a pixel basis, as indicated by duplex vertical lines and simplex vertical lines in Fig. 2.

Therefore, the inter-line difference signal $\underline{a}$ and the inter-frame difference signal $\underline{b}$ shown in Fig. 1 represent the difference signal between the sampled values on two adjacent scanning lines. Since the inter-frame difference signal $\underline{b}$ mentioned above is divided by the distribution circuit 7 into the first inter-frame difference signal $b_1$ and the second inter-frame difference signal $b_2$ which alternate with each other on a pixel basis, the first inter-frame difference signal $b_1$ represents the difference in the signals on the corresponding or same scanning lines between the successive frames in respect to the luminance component as well as the color difference component, as indicated by the vertical duplex lines in Fig. 2, and thus assumes zero value for the still or stationary picture portion while assuming values of significance (indicating motion or change) for the moving or changing picture portion.

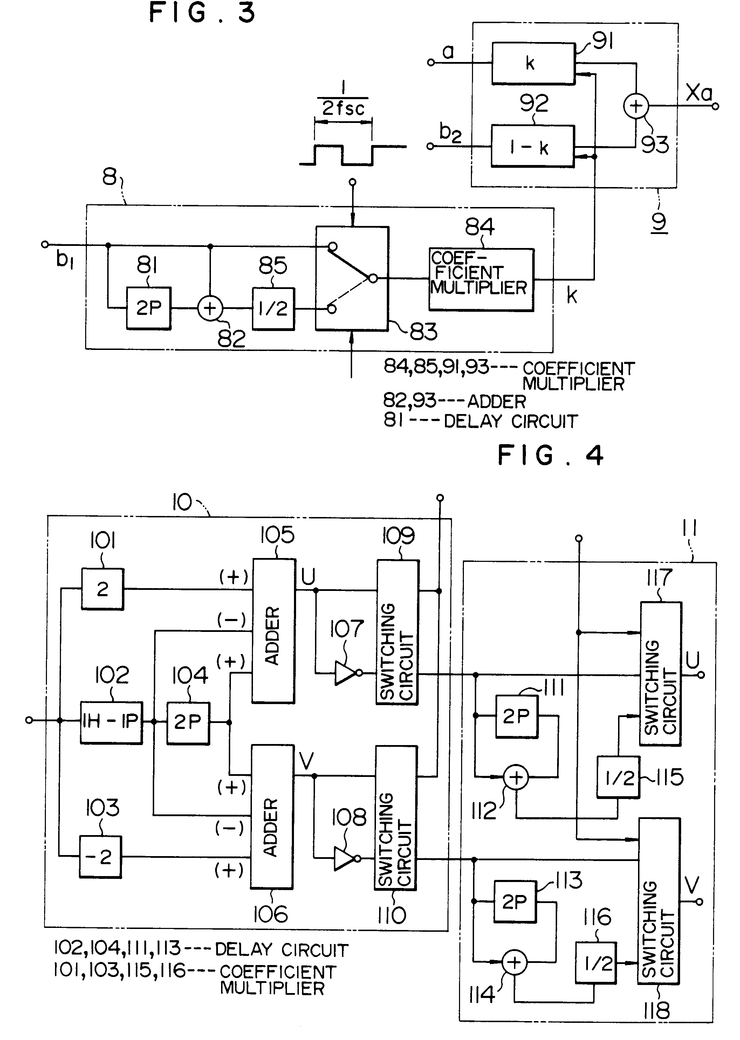

Fig. 3 is a block circuit diagram showing, by way of example, circuit configurations of the motion detecting circuit 8 and the mixing circuit 9.

A part of the first inter-frame difference signal $b_1$ is directly applied to a switching circuit 83 with the other part of the signal $b_1$ being applied thereto by way of a two-pixel period delay circuitry 81 for applying a delay of a period corresponding to two pixels, an adder 82 and a coefficient (1/2) multiplying circuit 85. The switching circuit 83 operates to change over these two inputs in response to a drive pulse signal having a period of $1/2f_{SC}$ and in synchronism with the chrominance subcarrier frequency. The output of the switching circuit 83 is applied to the input of a coefficient multiplying circuit 84 to be converted to a factor signal $\underline{k}$ which assumes a value between 0 and 1. In other words, in the motion detecting circuit 8, the inter-frame difference signal is made use of as the motion information representing the difference in the signal between the pixels shown as interconnected by the duplex lines in Fig. 2, while the averaged or mean value of the two horizontally adjacent inter-frame difference signals is utilized as the motion or change information between the pixels shown as interconnected by the simplex lines. Since the picture motion (change) information indicating motion or change of an object to be reproduced is primarily of low frequency components with high frequency components being negligible, the averaging mentioned above presents no material problem, whereby a frame memory otherwise required can be spared, simplifying correspondingly the circuit structure to advantage.

The coefficient $\underline{k}$ is so selected that it assumes a value between 0 and 1 and takes the value of 0 for the stationary portion of the picture while taking the value 1 for the truely moving or changing picture portion.

The mixing circuit 9 is composed of a first coefficient (k) multiplying circuit 91 for multiplying the inter-line difference signal $\underline{a}$ (value of which is represented by $X_L$) with a coefficient $\underline{k}$, a second coefficient multiplying circuit 92 for multiplying the second inter-frame difference signal $b_2$ (value of which is represented by $X_F$) with coefficient (1 - k), and an adder 93 for producing a sum signal $x_a$ from the outputs of the two coefficient circuits 91 and 92 mentioned above. Thus, the output $X_a$ of the mixing circuit 9 can be given by the following expression:

$$X_a = (1 - k) X_F + kX_L \qquad (3)$$

Fig. 4 is a block diagram showing, by way of example, circuit configurations of the demodulating circuit 10 and the interpolating circuit 11.

In view of the relation in phase illustrated in Fig. 2, the inter-line difference signal $\underline{a}$ and the second inter-frame difference signal $b_2$ assume values of 0, $\sqrt{2}$ (u - v), 0, - $\sqrt{2}$ (u - v) and so forth, for example, for the pixels 28, 29, 30 and 31 and so forth on the pixel basis and assumes $\sqrt{2}$ (u + v), 0, - $\sqrt{2}$ (u + v), 0 and so forth for the successive scanning lines, respectively. Accordingly, the u-signal and the v-signal, for example, for the pixel 29 (represented by $u_{29}$ and $v_{29}$, respectively) can be determined in accordance with the following expressions:

$$\left.\begin{aligned}
u_{29} &= \frac{1}{4\sqrt{2}} (2X_{29} + X'_{28} - X'_{30}) \\
v_{29} &= \frac{1}{4\sqrt{2}} (-2X_{29} + X'_{28} - X'_{30})
\end{aligned}\right\} \quad \cdots\cdots \quad (4)$$

where $X_{29}$, $X'_{28}$ and $X'_{30}$ represent the values of the corresponding signals for the pixels 29, 28' and 30', respectively.

The circuits for realizing the above expressions (4) are constituted by coefficient multiplying circuits 101 and 103, delay circuits 102 and 104 and adder circuits 105 and 106, respectively, which are interconnected as shown in Fig. 4, wherein H and P entered in the blocks 102 and 104 represent delays corresponding to one line period and one pixel period, respectively. Switching circuits 109 and 110 and inverters 107 and 108 cooperate to match the polarities of the demodulated u- and v-signals mentioned above, because these signals are inverted in the poalrity periodically at the interval corresponding to two pixels.

The interpolating circuit 11 serves to generate signals for interpolating the u- and v-signals, respectively, periodically at the interval corresponding to two pixels. In this conjunction, it will be noted that the very output of the demodulating circuit 10 can be utilized intact as the u-signals $u_{29}$ and $u_{31}$ and the v-signals $v_{29}$ and $v_{31}$ for the pixels 29 and 31, by way of example. However, for the u-signal $u_{30}$ and the v-signal $v_{30}$ for the pixel 30, interpolation must be performed by making use of the mean values determined in accordance with the following respective expressions:

$$u_{30} = \frac{u_{29} + u_{31}}{2} \text{ , and } v_{30} = \frac{v_{29} + v_{31}}{2} \qquad (5)$$

The above expressions can be realized through cooperation of two-pixel delay circuits 111; 113, adders 112; 114 and coefficient multiplying circuits 115; 116, respectively.

Which of the output from the demodulating circuit and the output from the interpolating circuit is to be utilized changes line by line (i.e. on a line basis) and frame by frame (i.e. on a frame basis). The switching operation to this end is performed by switching circuits 116 and 117. It should be added that the arithmetic operation of the demodulation circuit is not restricted to the above-mentioned expressions (4) and (5). The u-signal $u_{30}$ and the v-signal $v_{30}$ may also be determined by using signal values $X_{29}$, $X'_{30}$ and $X'_{31}$ in accordance with

$$\left.\begin{aligned}
u_{30} &= \frac{1}{4\sqrt{2}} (-2X'_{30} + X_{29} - X'_{31}) \\
v_{30} &= \frac{1}{4\sqrt{2}} (-2X'_{30} - X_{29} + X'_{31})
\end{aligned}\right\} \quad \cdots\cdots \quad (6)$$

Since the chrominance component of the PAL color television signal is limited to 1.3 MHz, the color difference signals can be demodulated substantially exactly through the averaging process for the horizontally preceding and succeeding pixels as described above.

The demodulated u- and v-signals are again modulated by the modulation circuit 12 to obtain the chrominance signal. By subtracting this signal from the PAL color television signal, there can be obtained the luminance (Y) signal of high quality. The modulating circuit 12 may be constituted by a given one of those known heretofore.

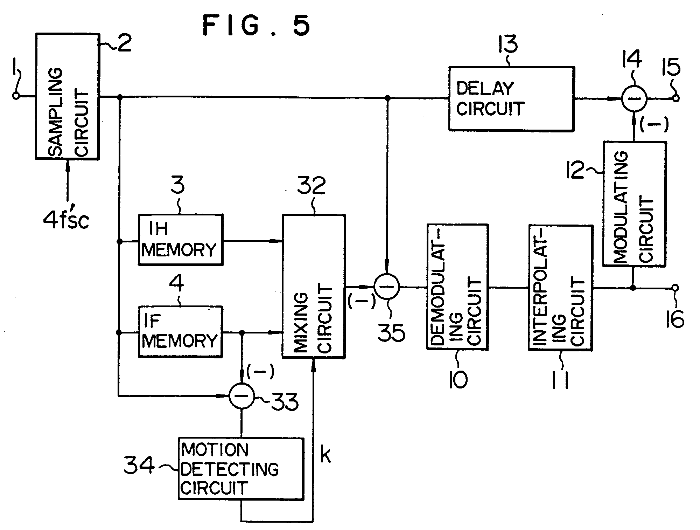

Fig. 5 shows in a block diagram a structure of the luminance/chrominance or YC separation circuit according to another embodiment of the invention which differs from the circuit shown in Fig. 1 in the arrangement around the mixing circuit. In Fig. 5, like parts as those shown in Fig. 1 are denoted by like reference numerals and repeated description thereof is omitted. According to the instant embodiment shown in Fig. 5, the outputs of the line memory 3 and the frame memory 4 are directly inputted to the mixing circuit 32 the mixing ratio of which is controlled by the motion information k derived from the inter-frame difference signal by the motion detecting circuit 34, wherein the inter-frame difference signal in turn is derived by a subtraction circuit 33 provided separately. The output of the mixing circuit 32 is subtracted from the PAL composite color television signal by a subtraction circuit 35 to obtain the pixel signals for every other pixel. In other words, the output of the subtaction circuit 35 is identical with that of the mixing circuit 9 shown in Fig. 1 and subsequently undergoes the further processing in the utterly same manner as described hereinbefore in conjunction with the YC separation circuit shown in Fig. 1.

In the foregoing, the present invention has been described in conjunction with the preferred or exemplary embodiments of the YC-separation circuit for the PAL color television signal. However, the invention is not restricted to the illustrated embodiments, but numerous modifications and variations can readily occur to those skilled in the art without departing from the scope of the invention as defined by the claims.

## Claims

1. A circuit for separating a PAL colour television signal into a luminance signal and colour difference signals, comprising:

   a sampling circuit (2) for sampling pixels of said PAL colour television signal at four times the frequency of the colour subcarrier and at phases of 45°, 135°, 225° and 315° relative to the colour subcarrier,
   delay circuits (3, 4) for delaying the output signal of said sampling circuit (2) for a period corresponding to one line and for a period corresponding to one frame of the PAL colour television signal to obtain a one-line delayed signal and a one-frame delayed signal,
   a first subtraction circuit (6, 33) for subtracting said one-frame delayed signal from the output signal of said sampling circuit (2) to obtain an inter-frame difference signal (b),
   a motion detecting circuit (8, 34) for deriving a motion information signal (k) from first pixels (28, 30) of said inter-frame difference signal which have been sampled at phases of 45° and 225° relative to the colour subcarrier,
   means (5, 7, 9, 32, 35) for deriving for second pixels (29, 31) which have been sampled at phases of 135° and 315° relative to the colour subcarrier a chrominance signal which is a weighted average of the inter-frame difference signal for said second pixels (29, 31) and an inter-line difference signal, which weighted is controlled by said motion information signal (k),
   a demodulating circuit (10) for deriving a u-signal and a v-signal as PAL colour difference signals for said second pixels from said chrominance signal for said second pixels (29, 31), and
   an interpolating circuit (11) for deriving an interpolated u-signal and an interpolated v-signal for said first pixels (28, 30) from said u-signal and said v-signal for said second pixels, and thus providing, for said first pixels, said interpolated u- and v-signals, and for said second pixels said u- and v-signals derived by said demodulating circuit (10) as said colour difference signals of said PAL colour television signal.

2. A circuit according to claim 1, wherein said interpolating circuit (11) comprises a switching circuit (117, 118) for alternately switching over between said interpolated u- and v-signals of said first pixels and said u- and v-signals of said second pixels at half the sampling frequency of said sampling circuit to thereby obtain said colour difference signals.

3. A circuit according to claim 1 or 2, comprising

   a modulating circuit (12) for modulating said colour subcarrier with said colour difference signals outputted from said interpolating circuit (11) to obtain a chrominance signal, and

   a second subtraction circuit (14) for subtracting said chrominance signal from the output signal of said sampling circuit (2) to thereby obtain a luminance signal for said first and second pixels.

4. A circuit according to any of claims 1 to 3, wherein said means (5, 7, 9) for deriving said chrominance signal for said second pixels (29, 31) comprises:

a third subtraction circuit (5) for subtracting said one-line delayed signal from the output signal of said sampling circuit (2) to thereby obtain an inter-line difference signal (a),

a distributing circuit (7) for dividing said inter-frame difference signal alternately on a pixel-by-pixel basis into a first inter-frame difference signal (b1) inputted into said motion detecting circuit (8) and a second inter-frame difference signal (b2), and

a mixing circuit (9) for mixing said second inter-frame difference signal (b2) and an inter-line difference signal (a) for said second pixels (29, 31) at a mixing ratio controlled in accordance with said motion information signal (k) to thereby obtain said chrominance signal for said second pixels as a weighted average of said second inter-frame difference signal (b2) and said inter-line difference signal (a) for said second pixels.

5. A circuit according to any of claims 1 to 3, wherein said means (32, 35) for deriving said chrominance signal for said second pixels (29, 31) comprises:

a mixing circuit (32) for mixing said one-line delayed signal and said one-frame delayed signal at a mixing ratio controlled in accordance with said motion information signal (k), and

a third subtraction circuit (35) for subtracting the output signal of said mixing circuit (32) from the output signal of said sampling circuit (2) to thereby obtain said chrominance signal for said second pixels.


**Patentansprüche**

1. Schaltung zur Trennung eines PAL-Farbfernsehsignals in ein Luminanzsignal und Farbdifferenzsignale, aufweisend:

eine Abtastschaltung (2) zum Abtasten von Pixeln des PAL-Farbfernsehsignals mit vierfacher Frequenz des Farbträgers und bei Phasen von 45°, 135°, 225° und 315° bezüglich des Farbträgers,

Verzögerungsschaltungen (3, 4) zur Verzögerung des Ausgangssignals der Abtastschaltung (2) um eine einer Zeile entsprechende Zeitspanne und eine einem Rahmen des PAL-Farbfernsehsignals entsprechende Zeitspanne, um ein um eine Zeile und ein um einen Rahmen verzögertes Signal zu erhalten,

eine erste Subtraktionsschaltung (6, 33) zur Subtraktion des um einen Rahmen verzögerten Signals von dem Ausgangssignal der Abtastschaltung (2), um ein Zwischenrahmen-Differenzsignal (b) zu erhalten,

eine Bewegungserkennungsschaltung (8, 34) zur Ableitung eines Bewegungsinformationssignals (k) von ersten Pixeln (28, 30) des Zwischenrahmen-Differenzsignals, die bezüglich des Farbträgers bei Phasen von 45° und 225° abgetastet wurden,

eine Einrichtung (5, 7, 9, 32, 35), um für zweite Pixel (29, 31), die bezüglich des Farbträgers bei Phasen von 135° und 315° abgetastet wurden, ein Chrominanzsignal zu erhalten, das ein von dem Bewegungsinformationssignal (k) gesteuertes gewichtetes Mittel des Zwischenrahmen-Differenzsignals für die zweiten Pixel (29, 31) und eines Zwischenzeilen-Differenzsignals darstellt,

eine Demodulationsschaltung (10) zur Ableitung eines u-Signals und eines v-Signals als PAL-Farbdifferenzsignale für die zweiten Pixel aus den Chrominanzsignalen der zweiten Pixel (29, 31), und

eine Interpolationsschaltung (11) zur Ableitung eines interpolierten u-Signals und eines interpolierten v-Signals für die ersten Pixel (28, 30) aus dem u-Signal und dem v-Signal für die zweiten Pixel und um somit als Farbdifferenzsignale des PAL-Farbfernsehsignals für die ersten Pixel die interpolierten u- und v-Signale und für die zweiten Pixel die von der Demodulationsschaltung (10) abgeleiteten u- und v-Signale zu liefern.

2. Schaltung nach Anspruch 1, wobei die Interpolationsschaltung (11) eine Schalteinrichtung (117, 118) zum wechselweisen Umschalten zwischen den interpolierten u- und v-Signalen der ersten Pixel und den u- und v-Signalen der zweiten Pixel mit der halben Abtastfrequenz der Abtastschaltung aufweist, um die genannten Farbdifferenzsignale zu erhalten.

**3.** Schaltung nach Anspruch 1 oder 2, umfassend:

eine Modulationsschaltung (12) zur Modulation des Farbträgers mit den von der Interpolationsschaltung (11) ausgegebenen Farbdifferenzsignalen, um ein Chrominanzsignal zu erhalten, und

eine zweite Subtraktionsschaltung (14) zur Subtraktion des Chrominanzsignals von dem Ausgangssignal der Abtastschaltung (2), um so für die ersten und zweiten Pixel ein Luminanzsignal zu erhalten.

**4.** Schaltung nach einem der Ansprüche 1 bis 3, wobei die Einrichtung (5, 7, 9) zur Ableitung des Chrominanzsignals für die zweiten Pixel (29, 31) aufweist:

eine dritte Subtraktionsschaltung (5) zur Subtraktion des um eine Zeile verzögerten Signals von dem Ausgangssignal der Abtastschaltung (2), um somit ein Zwischenzeilen-Differenzsignal (a) zu erhalten,

eine Verteilerschaltung (7) zur Aufteilung des Zwischenrahmen-Differenzsignals Pixel für Pixel abwechselnd in ein erstes Zwischenrahmen-Differenzsignal (b1), das von der Bewegungserkennungsschaltung (8) empfangen wird, und ein zweites Zwischenrahmen-Differenzsignal (b2), und

eine Mischschaltung (9) zum Mischen des zweiten Zwischenrahmen-Differenzsignals (b2) und eines ZwischenzeilenDifferenzsignals (a) für die genannten zweiten Pixel (29, 31) mit einem entsprechend dem Bewegungsinformationssignal (k) gesteuerten Mischungsverhältnis, um so das Chrominanzsignal für die zweiten Pixel als gewichtetes Mittel des zweiten Zwischenrahmen-Differenzsignals (b2) und des Zwischenzeilen-Differenzsignals (a) für die zweiten Pixel zu erhalten.

**5.** Schaltung nach einem der Ansprüche 1 bis 3, wobei die Einrichtung (32, 35) zum Ableiten des Chrominanzsignals für die zweiten Pixel (29, 31) aufweist:

eine Mischschaltung (32) zum Mischen des um eine Zeile verzögerten Signals und des um einen Rahmen verzögerten Signals mit einem entsprechend dem Bewegungsinformationssignal (k) gesteuerten Mischungsverhältnis, und

eine dritte Subtraktionsschaltung (35) zur Subtraktion des Ausgangssignals der Mischschaltung (32) von dem Ausgangssignal der Abtastschaltung (2), um somit das Chrominanzsignal für die zweiten Pixel zu erhalten.

**Revendications**

**1.** Circuit pour séparer un signal de télévision couleurs PAL en un signal de luminance et des signaux de différences de couleurs, comprenant:

un circuit d'échantillonnage (2) pour échantillonner des pixels dudit signal de télévision couleurs à quatre fois la fréquence de la sous-porteuse de chrominance et selon des phases de 45°, 135°, 225° et 315° par rapport à la sous-porteuse de chrominance,

des circuits à retard (3, 4) pour retarder le signal de sortie dudit circuit d'échantillonnage (2) pendant un laps de temps correspondant à une ligne et pendant une période correspondant à une trame du signal de télévision couleurs PAL afin d'obtenir un signal retardé d'une ligne et un signal retardé d'une trame,

un premier circuit de soustraction (6, 33) pour soustraire du signal de sortie dudit circuit d'échantillonnage (2) ledit signal retardé d'une trame, afin d'obtenir un signal (b) de différence entre trames,

un circuit (8, 34) de détection de mouvement pour élaborer un signal (k) d'information de mouvement à partir de premiers pixels (28, 30) dudit signal de différence entre trames qui ont été échantillonnés selon des phases de 45° et 225° par rapport à la sous-porteuse de chrominance,

un moyen (5, 7, 9, 32, 35) pour élaborer, pour des seconds pixels (29, 31) qui ont été échantillonnés selon des phases de 135° et 315° par rapport à la sous-porteuse de chrominance, un signal de chrominance qui est une moyenne pondérée du signal de différence entre trames pour lesdits seconds pixels (29, 31) et un signal de différence entre lignes, laquelle moyenne pondérée est déterminée par ledit signal (k) d'information de mouvement,

un circuit de démodulation (10) pour élaborer un signal u et un signal v en tant que signaux de différences de couleurs PAL pour lesdits seconds pixels à partir dudit signal de chrominance pour lesdits seconds pixels (29, 31), et

un circuit d'interpolation (11) pour élaborer un signal u interpolé et un signal v interpolé pour lesdits premiers pixels (28, 30) à partir dudit signal u et dudit signal v pour lesdits seconds pixels, et produire ainsi, pour lesdits premiers pixels lesdits signaux u et v interpolés, et pour lesdits seconds pixels lesdits signaux u et v élaborés par ledit circuit de démodulation (10), constituant lesdits signaux de différences de couleurs dudit signal de télévision couleurs PAL.

2.  Circuit selon la revendication 1, dans lequel ledit circuit d'interpolation (11) comporte un circuit de commutation (117, 118) pour effectuer une commutation alternativement entre lesdits signaux u et v interpolés desdits premiers pixels et lesdits signaux u et v desdits seconds pixels à la moitié de la fréquence d'échantillonnage dudit circuit d'échantillonnage pour obtenir de ce fait lesdits signaux de différences de couleurs.

3.  Circuit selon la revendication 1 ou 2, comportant un circuit de modulation (12) pour moduler ladite sous-porteuse de chrominance avec lesdits signaux de différences de couleurs produits par ledit circuit d'interpolation (11) afin d'obtenir un signal de chrominance, et

un second circuit de soustraction (14) pour soustraire ledit signal de chrominance du signal de sortie dudit circuit d'échantillonnage (2) afin d'obtenir de ce fait un signal de luminance pour lesdits premiers et seconds pixels.

4.  Circuit selon l'une quelconque des revendications 1 à 3, dans lequel ledit moyen (5, 7, 9) pour élaborer ledit signal de chrominance pour lesdits seconds pixels (29, 31) comporte:

un troisième circuit de soustraction (5) pour soustraire du signal de sortie dudit circuit d'échantillonnage ledit signal retardé d'une ligne, afin d'obtenir de ce fait un signal (a) de différence entre lignes,

un circuit de distribution (7) pour diviser ledit signal de différence entre trames, alternativement et pixel par pixel, en un premier signal (b1) de différence entre trames appliqué audit circuit (8) de détection de mouvement et un second signal (b2) de différence entre trames, et

un circuit mélangeur (9) pour mélanger ledit second signal (b) de différence entre trames et un signal (a) de différence entre lignes pour lesdits seconds pixels (29, 31) dans des proportions de mélange déterminées en fonction dudit signal (k) d'information de mouvement afin d'obtenir de ce fait ledit signal de chrominance pour lesdits seconds pixels en tant que moyenne pondérée dudit second signal (b2) de différence entre trames et dudit signal (a) de différence entre lignes pour lesdits seconds pixels.

5.  Circuit selon l'une quelconque des revendications 1 à 3, dans lequel ledit moyen (32, 35) pour élaborer ledit signal de chrominance pour lesdits seconds pixels (29, 31) comporte:

un circuit mélangeur (32) pour mélanger ledit signal retardé d'une ligne et ledit signal retardé d'une trame dans des proportions de mélange déterminées en fonction dudit signal (k) d'information de mouvement, et

un troisième circuit de soustraction (35) pour soustraire du signal de sortie dudit circuit d'échantillonnage (2) le signal de sortie dudit circuit mélangeur (32) afin d'obtenir de ce fait ledit signal de chrominance pour lesdits seconds pixels.

# FIG. 1

# FIG. 2

SCANNING LINES

(L-2) — (L-2F)

(L-1) — (L-F)

28′  29′  30′  31′

(L) — (L)

28  29  30  31

(L+1) — (L+F)

28″  30″

(L+2) — (L+2F)

● SAMPLED PIXELS

○ u−SIGNAL          ⊗ INVERTED u−SIGNAL

□ v−SIGNAL          ⊠ INVERTED v−SIGNAL

# FIG. 3

84,85,91,93 --- COEFFICIENT
MULTIPLIER

82,93 --- ADDER

81 --- DELAY CIRCUIT

# FIG. 4

102,104,111,113 --- DELAY CIRCUIT
101,103,115,116 --- COEFFICIENT
MULTIPLIER

# FIG. 5